# FASCICULE DE BREVET EUROPEEN

(11) **EP 3 008 420 B1**
(45) Date de publication et mention de la délivrance du brevet: **08.04.2020**
(21) Numéro de dépôt: 14730160.0
(22) Date de dépôt: 13.06.2014
(51) Int. Cl.: G01B 17/06, G01N 29/24, G01N 29/04, G01N 29/275

(54) **DISPOSITIF DE CONTRÔLE ROBOTISÉ D'UNE STRUCTURE PAR ULTRASON-LASER**
VORRICHTUNG ZUR ROBOTISCHEN STEUERUNG EINER STRUKTUR DURCH EINEN ULTRASCHALLLASER
DEVICE FOR THE ROBOTIC CONTROL OF A STRUCTURE BY ULTRASOUND-LASER

(30) Priorité: 14.06.2013 FR 1355582
(43) Date de publication de la demande: 20.04.2016
(73) Titulaire: AIRBUS (SAS), 31700 Blagnac (FR)
(72) Inventeur: CAMPAGNE, Benjamin, F-44800 Saint Herblain (FR); VOILLAUME, Hubert, F-92130 Issy Les Moulineaux (FR)
(74) Mandataire: Gicquel, Olivier Yves Gérard
(86) Numéro de dépôt international: PCT/EP2014/062403
(87) Numéro de publication internationale: WO 2014/198910

(56) Documents cités:
- WO-A1-2012/110492
- DE-B3- 10 259 653
- US-A1- 2012 033 209
- US-A1- 2012 098 961
- US-A1- 2012 263 347

## Description

### DOMAINE DE L'INVENTION

L'invention se rapporte au domaine général du contrôle par ultrasons de la qualité de fabrication de pièces d'équipements aéronautiques, de pièces en matériau composite notamment, et plus particulièrement du contrôle santé-matière par ultrason-laser de ces mêmes pièces.

### CONTEXTE DE L'INVENTION - ART ANTERIEUR

Une méthode bien connue de contrôle non-destructif, telle que décrite dans le brevet DE 102 59 653 B3 consiste à coupler des transducteurs ultrasonores à la pièce à contrôler par le biais d'un milieu couplant tel que de l'eau. Un inconvénient de cette méthode est que son champ d'application est limité aux matériaux pouvant être mouillés sans être endommagés.

L'analyse santé matière d'éléments de structures est de nos jours effectuée par Ultrason-Laser qui est une méthode de contrôle sans contact très bien adaptée aux pièces de formes complexes.

On rappelle ici que l'analyse santé matière consiste en la recherche de défauts, de délaminages, de retassures, de porosités, de criques ou autres anomalies que peuvent comporter les matériaux utilisés pour fabriquer des pièces mécaniques, des éléments de structures notamment.

Pour répondre aux besoins du contrôle de pièces à haute cadence, la tendance actuelle est de confier l'exécution des tests d'intégrité à des systèmes automatiques, autrement dit des robots. L'exécution de ces tests par des robots permet notamment, dans le cadre de tests de séries de pièces, d'assurer une excellente reproductibilité d'exécution des tests d'une pièce à l'autre.

D'un point de vue structurel, ces robots sont généralement équipés d'un bras, ou plus généralement d'un appendice mobile, terminé par une source laser. Dans le cas du contrôle de pièces de grandes dimensions notamment, ils peuvent en outre être configurés de façon à être en mesure de se déplacer de façon à se positionner à proximité de la pièce.

Dans certaines installations existantes, telle que celle décrite dans la demande de brevet internationale WO 2012/110492 A1, les pièces à inspecter sont maintenues en position fixe durant l'inspection. Le robot déplace la tête d'inspection au dessus de la pièce, de sorte que c'est la tête d'inspection, et non la pièce, qui se déplace. C'est en particulier le cas pour les installations destinées au test de pièces de grandes dimensions.

Selon les cas, la source laser peut alors être une source à faisceau fixe de sorte que le test d'intégrité est réalisé en déplaçant la tête d'inspection de façon à ce qu'elle éclaire successivement un ensemble de points répartis à la surface de la pièce que l'on souhaite contrôler. Dans une telle configuration, le contrôle de la pièce est effectué par un fonctionnement du robot en mode dynamique. Le balayage de la surface étant alors assuré par le déplacement du robot, ou du moins de la tête d'inspection, vis à vis de la surface à contrôler.

Alternativement, la source laser peut aussi être une source à faisceau mobile. Dans ce second cas, la source est elle-même équipée de moyens optiques, des miroirs par exemple, permettant, dans une certaine mesure, de défléchir, selon un ou deux axes, le faisceau laser produit. De la sorte, le test d'intégrité est réalisé en positionnant successivement la source en regard de la pièce en différents point espacés les uns des autres et en faisant balayer une portion de surface par le faisceau laser émis par la source de façon à ce qu'il couvre une zone donnée de la surface de la pièce. Le nombre et la disposition des points de contrôle sont définis de telle façon qu'au cours du test la totalité de la surface de la pièce soit balayée par le faisceau laser. Une telle configuration est celle adoptée notamment pour le système LUCIE (acronyme de la dénomination anglo-saxonne "Laser Ultrasonics Composite Inspection Equipment"), développé par la demanderesse.

Dans d'autres installations existantes, en revanche, le robot comporte une tête d'inspection fixe avec une source laser à faisceau fixe et ce sont les pièces à inspecter qui se déplacent et passent devant la tête d'inspection. C'est alors le déplacement de la pièce contrôlée qui permet à la tête d'inspection de balayer toute la surface de la pièce. Dans de telles installations le mouvement de la pièce peut par exemple être assuré par un bras manipulateur qui saisit la pièce et la déplace en regard de la tête d'inspection. De telles installations présentent l'avantage de la simplicité et de la robustesse, dans la mesure où la tête d'inspection étant fixe, l'alimentation de la source laser en énergie est plus simple que lorsque cette même source est mobile. Le bras manipulateur ne sert ici qu'à déplacer la pièce contrôlée. Cette simplicité est par ailleurs amplifiée si la source laser utilisée émet un faisceau fixe. En revanche, l'inspection de la totalité de la pièce nécessite que le bras manipulateur puisse assurer un positionnement précis, de la pièce vis-à-vis de la tête d'inspection et un déplacement rapide de cette dernière.

Si ces deux types d'installations sont généralement bien adaptés aux contrôles d'intégrité réalisés à l'heure actuelle par l'intermédiaire de robots, il est cependant des cas où elles conduisent à des limitations, notamment en termes de rapidité d'exécution des contrôles ou encore en termes d'efficacité des tests réalisés. En particulier de telles installations sont généralement peu appropriées au contrôle d'intégrité de pièces présentant des surfaces irrégulières, avec un relief plus ou moins marqué, et/ou une géométrie complexe.

En outre, concernant l'état de la technique, US 2012/0033209 A1 divulgue le mouvement synchronisé d'une tête d'inspection à ultrasons-laser et de l'objet à mesurer.

### PRESENTATION DE L'INVENTION

Un but de l'invention est de proposer un moyen permettant de s'affranchir des contraintes de fonctionnement présenté par les installations de contrôle de pièces robotisées existantes, en particulier dans le cadre de tests d'intégrité de structures de pièces aéronautiques.

A cet effet l'invention a pour objet un dispositif de contrôle de la structure d'une pièce en matériau composite comportant une tête d'inspection comportant elle-même une source d'émission d'au moins un faisceau laser et un robot manipulateur configuré pour assurer le maintien de la pièce et le déplacement de la surface de ladite pièce vis-à-vis de la tête d'inspection, de telle sorte que ladite surface puisse être balayée par le faisceau laser émis par la source qui équipe la tête d'inspection. Ladite source laser comporte des moyens pour réaliser le balayage du faisceau laser émis le long d'un axe de balayage donné et avec une amplitude donnée. Le robot manipulateur est configuré pour pouvoir déplacer la surface de la pièce le long d'un axe sensiblement perpendiculaire à l'axe le long duquel se déplace le faisceau laser. L'invention est définie par la revendication indépendante 1 annexée.

Selon diverses dispositions éventuellement utilisées conjoitement:
- la source laser émettant deux faisceaux laser, elle comporte des moyens permettant de réaliser le balayage des deux faisceaux le long de deux axes parallèles.
- la source laser émettant deux faisceaux laser, les moyens pour réaliser le balayage des deux faisceaux, sont configurés de façon à ce que le balayage de chaque faisceau soit réalisé indépendamment du balayage de l'autre faisceau.
- le robot manipulateur est configuré de telle façon qu'après chaque balayage par la source laser, la surface de la pièce est déplacée vis-à-vis de la tête d'inspection de telle façon que le balayage suivant couvre une zone de la surface de la pièce non encore balayée par celle-ci.
- la source laser émettant deux faisceau lasers, le pas de déplacement, d', de la pièce après chaque balayage et l'écart entre les deux faisceaux laser est défini de façon à réaliser un balayage complet de la surface de la pièce avec la résolution désirée.
- Le robot manipulateur est configuré de façon à pouvoir orienter la surface de la pièce contrôlée vis-à-vis de la tête d'inspection de telle façon qu'en tout point de contrôle à la surface de la pièce le faisceau laser présente une incidence optimale en termes d'éclairement.
- Le robot manipulateur comporte des moyens de préhension de la pièce capables de faire pivoter la surface de la pièce selon deux axes sensiblement perpendiculaires.
- le robot manipulateur comporte un élément de translation sur lequel sont placées les pièces à contrôler qui assure un déplacement linéaire desdites pièces. Ledit élément est agencé vis-à-vis de la tête d'inspection de telle façon que la pièce à contrôler se déplace selon un axe sensiblement perpendiculaire à l'axe de balayage du faisceau laser.
- Lorsque le robot manipulateur comporte un élément de translation, il est configuré de telle façon que, durant l'opération de contrôle, chaque pièce à contrôler puisse être amenée par un déplacement continu de l'élément de translation à proximité de la tête d'inspection puis déplacée pas à pas, entre deux balayages successifs sous la source laser.
- le robot manipulateur comporte un élément rotatif sur lequel est placée la pièce à contrôler et assurant une rotation de ladite pièce sur elle même, ledit élément étant agencé vis-à-vis de la tête d'inspection de telle façon que les faces de la pièce à contrôler soient successivement balayées par le faisceau laser de la tête d'inspection.

### DESCRIPTION DES FIGURES

Les caractéristiques et avantages de l'invention seront mieux appréciés grâce à la description qui suit, description qui s'appuie sur les figures annexées qui présentent:
- la figure 1, une représentation schématique du dispositif selon l'invention dans un premier mode de réalisation;
- la figure 2, une représentation schématique du dispositif selon l'invention dans un deuxième mode de réalisation;
- la figure 3, une représentation schématique du dispositif selon l'invention dans un troisième mode de réalisation.
- la figure 4, une représentation schématique du dispositif selon l'invention dans un quatrième mode de réalisation

### DESCRIPTION DETAILLEE

Quel que soit le mode de réalisation envisagé, le dispositif selon l'invention a pour caractéristique essentielle de combiner une tête d'inspection laser à faisceau mobile et des moyens pour maintenir la pièce contrôlée et déplacer cette pièce en regard de la tête d'inspection de telle façon que la totalité de la surface de la pièce puisse être éclairée par le faisceau au cours du test.

Selon l'invention, la source laser comporte des moyens permettant de défléchir le faisceau laser selon un axe unique, de façon à réaliser un balayage mono axial. Cette déflexion, avantageusement simple à mettre en œuvre, peut être réalisée par tout moyen connu, par exemple par un miroir mobile en rotation par rapport à la direction d'émission du faisceau laser.

Selon l'invention également les moyens de maintien et de déplacement de la pièce contrôlée sont configurés de façon à pouvoir, au cours du contrôle, déplacer la pièce en regard de la tête d'inspection selon une direction sensiblement perpendiculaire à la direction de balayage du faisceau laser.

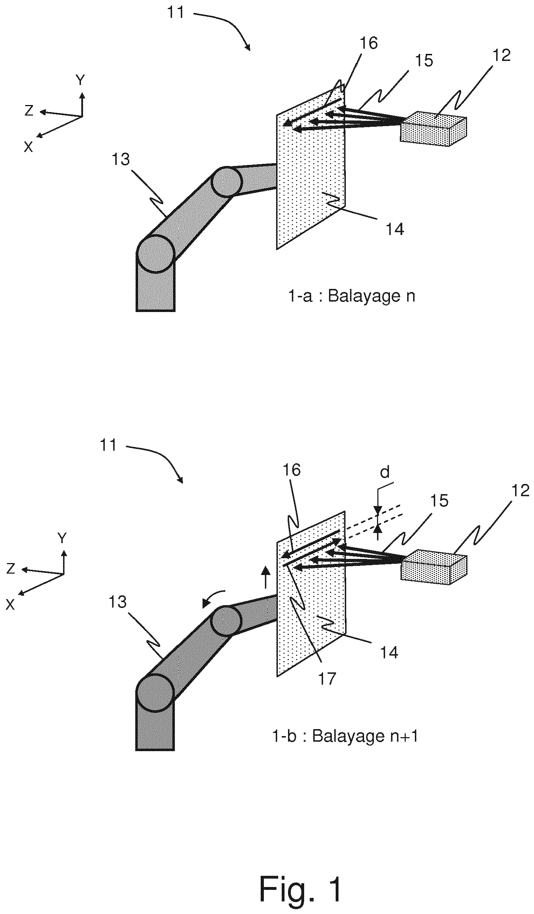

La figure 1 présente, à titre d'exemple non limitatif, une première forme de réalisation du dispositif selon l'invention.

Dans cette forme de réalisation, le dispositif 11 comporte ici une tête d'inspection 12 comportant une source laser mono faisceau et un robot 13 équipé d'un bras manipulateur, qui assure le maintien de la pièce 14 ainsi que son positionnement et son orientation en regard de la tête 12. L'utilisation d'un robot manipulateur permet ici avantageusement de déplacer la pièce 14 vis-à-vis de la tête d'inspection 12, indépendamment selon trois axes X, Y et Z. On peut ainsi positionner la pièce 14 de la façon désirée vis-à-vis de la tête d'inspection 12.

Par suite, l'inspection d'une pièce 14 consiste, par exemple, à partir d'une position initiale de la pièce par rapport à la tête d'inspection 12, à défléchir le faisceau laser 15 de façon à ce qu'il balaye la pièce le long d'une ligne parallèle à l'axe X, matérialisée par la flèche 16, puis lorsque la déflexion maximale du faisceau est atteinte, à déplacer la pièce 14 d'une distance d selon l'axe Y perpendiculaire à l'axe X et à défléchir le faisceau laser 15 dans la direction opposée de façon à ce qu'il balaye la pièce le long d'une ligne parallèle à la ligne de balayage précédente et distante de cette ligne d'un pas de distance d, ligne matérialisée par la flèche 17.

Alternativement, il est bien évidemment possible pour réaliser l'inspection de la pièce 14, de procéder après chaque déplacement d de réaliser le balayage du faisceau laser suivant une direction unique correspondant à la direction de la flèche 16 ou à celle de la flèche 17.

Il est à noter ici que le pas de déplacement, d, de la pièce après chaque balayage est défini de façon à réaliser un balayage complet de la surface de la pièce (14) avec la résolution désirée.

On peut ainsi, en combinant le balayage du faisceau laser 15 au déplacement linéaire progressif de la pièce 14 selon l'axe Y, procéder à une inspection progressive, ligne par ligne, de toute la surface de la pièce 14.

Une telle façon de procéder permet avantageusement d'optimiser le temps d'inspection dans la mesure où, pendant la durée d'un balayage, la pièce contrôlée est dans une position fixe et que la synchronisation entre l'émission laser et le déplacement de la pièce 14 en regard de la tête d'inspection 12 n'est nécessaire qu'au moment du changement de ligne.

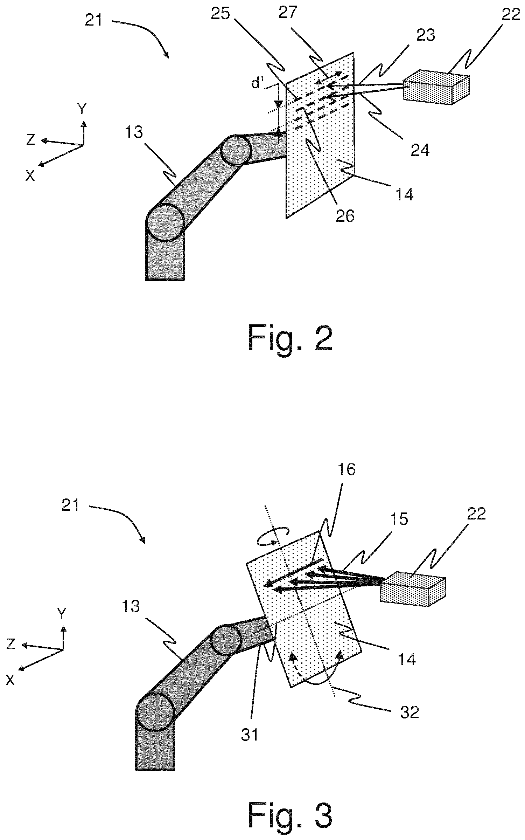

La figure 2 présente, à titre d'exemple non limitatif également, une deuxième forme de réalisation du dispositif selon l'invention.

Dans cette forme de réalisation, le dispositif 21 comporte ici une tête d'inspection 22 comportant une source laser à deux faisceaux 23 et 24 et un robot manipulateur 13 qui assure le maintien de la pièce 14 ainsi que son positionnement et son orientation en regard de la tête 22. Dans cette deuxième forme de réalisation, la source laser comporte des moyens permettant de défléchir les faisceaux laser 23 et 24 selon deux axes parallèles, matérialisés par les traits pointillés 25 et 26, de façon à réaliser un balayage mono axial pour chacun des deux faisceaux, la déflexion des faisceaux 23 et 24 pouvant être opérée dans les deux sens comme l'illustre la double flèche 27. Selon la variante de réalisation considérée, les moyens permettant de défléchir les deux faisceaux laser sont configurés pour réaliser un balayage simultané des deux faisceaux ou pour réaliser deux balayages indépendants.

En comparaison avec la forme de réalisation de la figure 1, cette seconde forme de réalisation permet avantageusement d'explorer deux fois plus rapidement la surface de la pièce 14 à contrôler, le déplacement, d', de la pièce 14 entre deux balayages consécutifs étant alors préférentiellement égal à deux fois le pas de distance d utilisé dans le cas d'un balayage mono faisceau.

Il est à noter ici que le pas de déplacement, d', de la pièce après chaque balayage et l'écart entre les deux faisceaux laser sont définis de façon à réaliser un balayage complet de la surface de la pièce (14) avec la résolution désirée.

La figure 3 illustre une variante de réalisation pouvant s'appliquer aux deux formes de réalisation des figures 1 et 2.

Selon cette variante avantageuse, appliquée, à titre d'exemple, à la forme de réalisation de la figure 1, le bras manipulateur 13 du robot est configuré de façon à conférer à la pièce 14 six degrés de liberté et permet notamment la rotation de ladite pièce autour de deux axes perpendiculaires 31 et 32. De la sorte, l'orientation de la pièce 14 vis-à-vis de la source laser peut être déterminée à tout instant en fonction de la zone éclairée par le faisceau laser 15 de façon à ce que l'éclairement se fasse sous incidence optimale, compte tenu en particulier de l'état de surface de la pièce 14 dans la zone considérée.

Une telle configuration permet ainsi une orientation optimale de la pièce et un balayage rapide d'une ligne par rotation du miroir permettant la déflexion du faisceau.

Concernant les variantes de réalisation correspondant aux figures 1 à 3, il est à noter que, dans le cas du contrôle d'une pièce de grandes dimensions, il peut arriver que le balayage du faisceau laser ne soit pas suffisant pour couvrir en totalité la pièce dans la direction de balayage. Dans ce cas, cependant, le contrôle de la pièce peut être réalisé secteur par secteur, un secteur correspondant à une portion de la surface de la pièce défini par l'amplitude du balayage et par le déplacement de la pièce le long de l'axe perpendiculaire à l'axe de balayage. De la sorte, le contrôle complet de la pièce peut être réalisé en divisant la surface de la pièce en secteurs contigus explorés les uns après les autres.

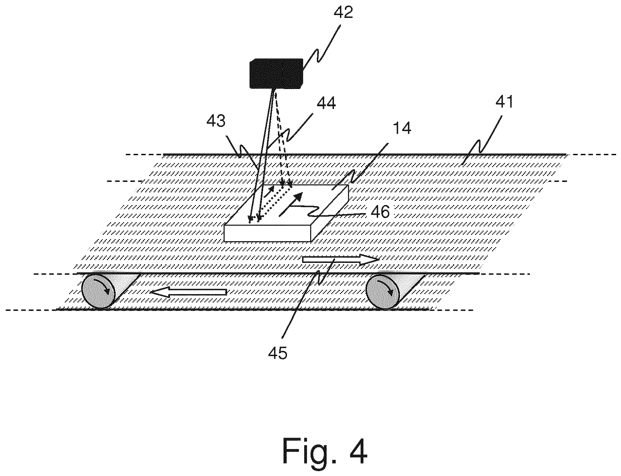

La figure 4, quant à elle, illustre une forme de réalisation plus particulière, dont la description permet de mettre en évidence le caractère avantageux du principe de fonctionnement de l'invention en termes de rapidité d'exécution notamment. Cette forme de réalisation est plus particulièrement adaptée au contrôle d'intégrité de pièces 14 présentant une dimension plus importante que les autres, par exemple des éléments allongés présentant une section faible comparée à leur longueur.

Elle intéresse également l'inspection de pièces présentant de relativement petites dimensions, produites en série, le dispositif étant alors placé en sortie de chaine de fabrication.

Dans cette forme de réalisation, le robot manipulateur du dispositif selon l'invention comporte un élément mécanique de translation 41, de type tapis roulant par exemple, sur lequel sont placées les pièces 14 à inspecter, chaque pièce étant placée sur le tapis de telle façon que sa longueur soit orientée dans la direction de déplacement. Le tapis roulant est associé à des moyens permettant au tapis de réaliser un défilement, de sorte qu'une pièce 14 qui y est déposée peut être déplacée de façon à être éclairée par le faisceau laser de la tête d'inspection 42, cette dernière étant ici placée au dessus du tapis.

Dans cette forme de réalisation, la tête d'inspection 42 est préférentiellement équipée d'une source laser émettant deux faisceaux simultanés, 43 et 44, pouvant être défléchis pour réaliser un balayage selon une direction 46 perpendiculaire au sens de déplacement du tapis roulant, matérialisé par la flèche 45. L'amplitude du balayage des faisceaux laser est définie de façon à couvrir la totalité de la dimension de la pièce selon l'axe de balayage, la pièce elle-même ne pouvant ici être déplacée que selon un axe unique. Ainsi pour réaliser l'inspection totale d'une pièce il suffit d'amener la pièce 14 au niveau de la tête d'inspection 42 en actionnant le tapis roulant, puis de déplacer la pièce 14 pas à pas en regard de la tête d'inspection 42, la longueur du pas de déplacement étant définie à la fois par la résolution souhaitée et par l'espacement des deux faisceaux laser 43 et 44. Une fois l'inspection terminée, le tapis roulant 41 peut reprendre un défilement continu plus rapide de façon à amener la pièce suivante en regard de la tête d'inspection 42.

Il est à noter que l'utilisation d'un tapis roulant pour réaliser l'élément mécanique de translation 41 est ici considérée à titre d'exemple de réalisation. Tout élément permettant d'assurer un mouvement de translation des pièces 14 vis-à-vis de la tête d'inspection 12 peut évidemment être envisagé dans le contexte de l'invention: platine de translation tapis roulant, rail, ...etc.

Il est à noter également que concernant ce dernier exemple de réalisation du dispositif selon l'invention l'utilisation d'un robot manipulateur comportant un élément mécanique de translation rectiligne peut être étendu à l'utilisation d'un élément mécanique induisant un mouvement de rotation à la pièce inspectée. Le robot manipulateur se présente alors comme un disque au centre duquel est déposée la pièce inspectée de sorte que celle- ci, tournant sur elle-même, présente successivement plusieurs faces au faisceau laser de la tête d'inspection. Une telle configuration est avantageusement adaptée à l'inspection de pièces présentant une certaine symétrie de révolution.

Ainsi qu'il ressort de la description des différents exemples de réalisation qui précède, le dispositif selon l'invention comporte ainsi, de manière avantageuse, deux moyens distincts qui coopèrent pour assurer une inspection complète et rapide de la pièce à inspecter.

Le premier moyen consiste en une source laser équipée de moyens permettant de défléchir le (les) faisceau(x) laser, 15, 23-24, 43-44, émis selon un axe de balayage donné 16, 17 ou 46.

Le second moyen consiste en un robot manipulateur 13 qui permet de déplacer la pièce 14 à inspecter vis-à-vis de la tête d'inspection, 12, 22 ou 42, au moins selon une direction sensiblement perpendiculaire à l'axe de balayage, ce qui évite la mise en œuvre d'une tête d'inspection mobile.

Ainsi en combinant les déplacements engendrés par ces deux moyens il est possible de réaliser de manière rapide l'inspection de la totalité de la pièce considérée sans pour autant avoir à déplacer la tête d'inspection elle-même. Une telle configuration s'avère très avantageuse en particulier lorsque les faisceaux lasers utilisés ne sont pas compatibles d'une transmission par fibre optique, et que leur mise en œuvre dans le cadre d'une tête d'inspection nécessite une architecture opto-mécanique plus complexe et plus couteuse.

Par ailleurs la combinaison de ces moyens avec des moyens permettant de faire se mouvoir la pièce en rotation vis-à-vis de la tête d'inspection permet avantageusement d'obtenir, pour chaque point d'inspection, une incidence optimale du faisceau laser par rapport à la surface de la pièce inspectée.

L'invention est définie par la revendication indépendante 1 annexée.

## Revendications

1. Dispositif (11) de contrôle de la structure d'une pièce (14) en matériau composite par Ultrason-Laser, **caractérisé en ce qu'**il comporte une tête d'inspection (12) comportant une source d'émission d'au moins un faisceau laser et un robot manipulateur (13) configuré pour assurer le maintien de la pièce (14) et le déplacement de la surface de ladite pièce vis-à-vis de la tête d'inspection (12), de telle sorte que ladite surface puisse être balayée par le faisceau laser (15) émis par la source qui équipe la tête d'inspection ; ladite source laser comportant des moyens pour réaliser un balayage du faisceau laser émis, le balayage étant réalisé le long d'un axe de balayage (16) donné, avec une amplitude de balayage donnée, le robot manipulateur (13) étant configuré pour pouvoir déplacer la surface de la pièce après chaque balayage le long d'un axe sensiblement perpendiculaire à l'axe (16) le long duquel se déplace le faisceau laser, le déplacement de la pièce (14) étant synchronisé avec le balayage du faisceau laser (15).

2. Dispositif selon la revendication 1, **caractérisé en ce que**, la source laser émettant deux faisceaux lasers (23, 24), elle comporte des moyens permettant de réaliser le balayage des deux faisceaux le long de deux axes parallèles (25, 26).

3. Dispositif selon la revendication 2, **caractérisé en ce que** les moyens pour réaliser le balayage des deux faisceaux (23, 24) sont configurés de façon à ce que le balayage de chaque faisceau soit réalisé indépendamment du balayage de l'autre faisceau.

4. Dispositif selon l'une des revendications 1 à 3, **caractérisé en ce que** le robot manipulateur (13) est configuré de telle façon qu'après chaque balayage par la source laser, la surface de la pièce (14) est déplacée vis-à-vis de la tête d'inspection (12) de telle façon que le balayage suivant couvre une zone de la surface de la pièce non encore balayée par celle-ci.

5. Dispositif selon la revendication 4, **caractérisé en ce que**, la source laser émettant deux faisceau lasers (23, 24), le pas de déplacement, d', de la pièce après chaque balayage et l'écart entre les deux faisceaux laser est défini de façon à réaliser un balayage complet de la surface de la pièce (14) avec la résolution désirée.

6. Dispositif selon l'une quelconque des revendications précédentes, **caractérisé en ce que** le robot manipulateur (13) est configuré de façon à pouvoir orienter la surface de la pièce (14) contrôlée vis-à-vis de la tête d'inspection (12) de telle façon qu'en tout point de contrôle à la surface de la pièce (14) le faisceau laser (15) présente une incidence optimale en termes d'éclairement.

7. Dispositif selon la revendication 6, **caractérisé en ce que** le robot manipulateur (13) comporte des moyens de préhension de la pièce (14) capables de faire pivoter la surface de la pièce selon deux axes (31, 32) sensiblement perpendiculaires.

8. Dispositif selon l'une quelconque des revendications 1 à 5, **caractérisé en ce que** le robot manipulateur comporte un élément de translation (41) sur lequel sont placées les pièces (14) à contrôler et assurant un déplacement linéaire desdites pièces, ledit élément (41) étant agencé vis-à-vis de la tête d'inspection (12) de telle façon que la pièce à contrôler se déplace selon un axe (45) sensiblement perpendiculaire à l'axe de balayage (46) du faisceau laser (43, 44).

9. Dispositif selon la revendication 8, **caractérisé en ce que** le robot manipulateur est configuré de telle façon que durant l'opération de contrôle chaque pièce à contrôler puisse être amenée par un déplacement continu de l'élément de translation (41) à proximité de la tête d'inspection (12) puis déplacée pas à pas, entre deux balayages successifs sous la source laser.

10. Dispositif selon l'une quelconque des revendications 1 à 5, **caractérisé en ce que** le robot manipulateur comporte un élément rotatif sur lequel est placée la pièce (14) à contrôler et assurant une rotation de ladite pièce sur elle même, ledit élément étant agencé vis-à-vis de la tête d'inspection (12) de telle façon que les faces de la pièce à contrôler soient successivement balayées par le faisceau laser de la tête d'inspection.

## Patentansprüche

1. Vorrichtung (11) für die Kontrolle der Struktur eines Teils (14) aus einem Verbundmaterial mittels Ultraschall-Laser, **dadurch gekennzeichnet, dass** sie einen Inspektionskopf (12) umfasst, der eine Quelle zum Aussenden wenigstens eines Laser-Strahlenbündels und einen Manipulationsroboter (13), der konfiguriert ist, das Halten des Teils (14) und die Verlagerung der Oberfläche des Teils in Bezug auf den Inspektionskopf (12) sicherzustellen, enthält, derart, dass die Oberfläche mit dem Laser-Strahlenbündel (15), das durch die Quelle, mit der der Inspektionskopf ausgestattet ist, ausgesendet wird, überstrichen werden kann; wobei die Laser-Quelle Mittel umfasst, um ein Überstreichen des ausgesendeten Laser-Strahlenbündels auszuführen, wobei das Überstreichen längs einer gegebenen Überstreichungsachse (16) mit einer gegebenen Überstreichungsamplitude ausgeführt wird, wobei der Manipulationsroboter (13) so konfiguriert ist, dass er die Oberfläche des Teils nach jedem Überstreichen längs einer Achse, die zu der Achse (16), längs derer sich das Laser-Strahlenbündel verlagert, im Wesentlichen senkrecht ist, verlagern kann, wobei die Verlagerung des Teils (14) mit dem Überstreichen mit dem Laser-Strahlenbündel (15) synchronisiert ist.

2. Vorrichtung nach Anspruch 1, **dadurch gekennzeichnet, dass** sie dann, wenn die Laser-Quelle zwei Laser-Strahlenbündel (23, 24) aussendet, Mittel umfasst, die das Überstreichen mit den beiden Strahlenbündeln längs zweier paralleler Achsen (25, 26) ermöglichen.

3. Vorrichtung nach Anspruch 2, **dadurch gekennzeichnet, dass** die Mittel für die Ausführung des Überstreichens mit den beiden Strahlenbündeln (23, 24) in der Weise konfiguriert sind, dass das Überstreichen mit jedem Strahlenbündel unabhängig vom Überstreichen mit dem anderen Strahlenbündel ausgeführt wird.

4. Vorrichtung nach einem der Ansprüche 1 bis 3, **dadurch gekennzeichnet, dass** der Manipulationsroboter (13) in der Weise konfiguriert ist, dass nach jedem Überstreichen mit der Laser-Quelle die Oberfläche des Teils (14) in Bezug auf den Inspektionskopf (12) in der Weise verlagert wird, dass das folgende Überstreichen eine Zone der Oberfläche des Teils abdeckt, die von ihm noch nicht überstrichen worden ist.

5. Vorrichtung nach Anspruch 4, **dadurch gekennzeichnet, dass** dann, wenn die Laser-Quelle zwei Laser-Strahlenbündel (23, 24) aussendet, die Verlagerungsschrittweite d' des Teils nach jedem Überstreichen und der Abstand zwischen den beiden Laser-Strahlenbündeln in der Weise definiert sind, dass ein vollständiges Überstreichen der Oberfläche des Teils (14) mit der gewünschten Auflösung ausgeführt wird.

6. Vorrichtung nach einem der vorhergehenden Ansprüche, **dadurch gekennzeichnet, dass** der Manipulationsroboter (13) in der Weise konfiguriert ist, dass er die Oberfläche des kontrollierten Teils (14) in Bezug auf den Inspektionskopf (12) in der Weise orientieren kann, dass an jedem Kontrollpunkt auf der Oberfläche des Teils (14) das Laser-Strahlenbündel (15) im Hinblick auf die Beleuchtung optimal auftrifft.

7. Vorrichtung nach Anspruch 6, **dadurch gekennzeichnet, dass** der Manipulationsroboter (13) Mittel zum Greifen des Teils (14) umfasst, die die Oberfläche des Teils längs zweier im Wesentlichen zueinander senkrechter Achsen (31, 32) schwenken kann.

8. Vorrichtung nach einem der Ansprüche 1 bis 5, **dadurch gekennzeichnet, dass** der Manipulationsroboter ein Translationselement (41) umfasst, auf dem die zu kontrollierenden Teile (14) angeordnet sind und das eine geradlinige Verlagerung der Teile sicherstellt, wobei das Element (41) gegenüber dem Inspektionskopf (12) in der Weise angeordnet ist, dass sich das zu kontrollierende Teil längs einer Achse (45) verlagert, die zu der Überstreichungsachse (46) des Laser-Strahlenbündels (43, 44) im Wesentlichen senkrecht ist.

9. Vorrichtung nach Anspruch 8, **dadurch gekennzeichnet, dass** der Manipulationsroboter in der Weise konfiguriert ist, dass während des Kontrollbetriebs jedes zu kontrollierende Teil durch eine ununterbrochene Verlagerung des Translationselements (41) in die Nähe des Inspektionskopfes (12) gebracht werden kann und dann schrittweise zwischen zwei aufeinander folgenden Überstreichungen mit der Laser-Quelle verlagert werden kann.

10. Vorrichtung nach einem der Ansprüche 1 bis 5, **dadurch gekennzeichnet, dass** der Manipulationsroboter ein Drehelement aufweist, auf dem das zu kontrollierende Teil (14) angeordnet ist und das eine Drehung des Teils um sich selbst sicherstellt, wobei das Element gegenüber dem Inspektionskopf (12) in der Weise angeordnet ist, dass die Flächen des zu kontrollierenden Teils mit dem Laser-Strahlenbündel des Inspektionskopfes nacheinander überstrichen werden.

## Claims

1. Device (11) for inspecting the structure of a composite part (14) by laser-ultrasound, **characterized in that** it includes an inspecting head (12) including a source emitting at least one laser beam, and a handling robot (13) configured to hold the part (14) and move the surface of said part relative to the inspecting head (12) in such a way that said surface is able to be scanned by the laser beam (15) emitted by the source with which the inspecting head is equipped, said laser source including means for carrying out a scan of the emitted laser beam, the scan being carried out along a given scanning axis (16) with a given scanning amplitude, the handling robot (13) being configured in order to be able to move, after each scan, the surface of the part along an axis substantially perpendicular to the axis (16) along which the laser beam moves, the movement of the part (14) being synchronized with the scanning of the laser beam (15).

2. Device according to Claim 1, **characterized in that**, the laser source emitting two laser beams (23, 24), it comprises means allowing the two beams to be scanned along two parallel axes (25, 26).

3. Device according to Claim 2, **characterized in that** the means for scanning the two beams (23, 24) are configured so that each beam is scanned independently of the scanning of the other beam.

4. Device according to one of Claims 1 to 3, **characterized in that** the handling robot (13) is configured in such a way that after each scan by the laser source, the surface of the part (14) is moved relative to the inspecting head (12) in such a way that the following scan covers a zone of the surface of the part as yet not scanned thereby.

5. Device according to Claim 4, **characterized in that**, the laser source emitting two laser beams (23, 24), the motional step, d', of the part after each scan and the separation between the two laser beams is defined so as to obtain a complete scan of the surface of the part (14) with the desired resolution.

6. Device according to any one of the preceding claims, **characterized in that** the handling robot (13) is configured so as to allow the surface of the inspected part (14) to be orientated relative to the inspecting head (12) in such a way that at every inspection point on the surface of the part (14) the laser beam (15) has an incidence that is optimal in illumination terms.

7. Device according to Claim 6, **characterized in that** the handling robot (13) includes means for gripping the part (14), which means are capable of making the surface of the part pivot about two substantially perpendicular axes (31, 32).

8. Device according to any one of Claims 1 to 5, **characterized in that** the handling robot includes a translating element (41) on which the parts (14) to be inspected are placed and which ensures a linear movement of said parts, said element (41) being arranged relative to the inspecting head (12) in such a way that the part to be inspected moves along an axis (45) substantially perpendicular to the scanning axis (46) of the laser beam (43, 44).

9. Device according to Claim 8, **characterized in that** the handling robot is configured in such a way that during the inspection operation each part to be inspected can be brought, via a continuous movement of the translating element (41), into proximity with the inspecting head (12), then moved stepwise between two successive scans under the laser source.

10. Device according to any one of Claims 1 to 5, **characterized in that** the handling robot includes a rotating element on which the part (14) to be inspected is placed and which ensures a rotation of said part about itself, said element being arranged relative to the inspecting head (12) in such a way that the faces of the part to be inspected are scanned in succession by the laser beam of the inspecting head.
